(19) Europäisches Patentamt / European Patent Office / Office européen des brevets

(11) **EP 3 495 164 B1**

(12) **EUROPEAN PATENT SPECIFICATION**

(45) Date of publication and mention
of the grant of the patent:
**03.06.2020 Bulletin 2020/23**

(51) Int Cl.:
**B60C 9/00** *(2006.01)*          **D07B 1/06** *(2006.01)*
**B60C 9/20** *(2006.01)*

(21) Application number: **17836860.1**

(22) Date of filing: **27.07.2017**

(86) International application number:
**PCT/JP2017/027337**

(87) International publication number:
**WO 2018/025754 (08.02.2018 Gazette 2018/06)**

(54) **PNEUMATIC TIRE**

LUFTREIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2016 JP 2016154984**

(43) Date of publication of application:
**12.06.2019 Bulletin 2019/24**

(73) Proprietor: **Bridgestone Corporation
Tokyo 104-8340 (JP)**

(72) Inventor: **MORI Yuriko
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 0 372 959          EP-A1- 0 399 795
EP-A1- 0 501 720          EP-A1- 1 688 274
EP-A1- 2 845 749          JP-A- H1 181 166
JP-A- H02 154 086         JP-A- H02 306 801
JP-A- H04 193 605         JP-A- H04 193 605
JP-A- H11 278 012         JP-A- 2000 008 282
JP-A- 2015 052 192**

**Description**

TECHNICAL FIELD

The present invention relates to a pneumatic tire (hereinafter, also simply referred to as "tire"), particularly a pneumatic tire in which not only the cutting resistance is enhanced but also the resistance to penetration of a foreign matter is improved without deterioration of the crack propagation resistance of an outermost belt layer.

BACKGROUND ART

General dump truck tires running on rough ground on occasions are forced to run on road surfaces on which broken rocks are scattered. Thus, steel cords are widely used as reinforcing materials. Under such circumstances, as a steel cord for truck/bus tires that has excellent belt-end separation resistance and improves the tire durability and retreadability, for example, Patent Document 1 proposes a steel cord which includes a core composed of one to three steel filaments and six to nine steel filaments twisted together around the core and satisfies prescribed physical properties. Document EP0399795 A1 discloses a pneumatic tire (4) comprising a belt (11) composed of three belt layers on the tire radial-direction outer side of a carcass (10). A steel cord of the radially outermost belt layer has a layer-twisted structure comprising a core (1) composed of two circular steel filaments and a sheath (2) composed of eight steel filaments that are twisted together around the core (1). The two core filaments are twisted together, wherein the twisting direction of the steel filaments of the core (1) is the same as the twisting direction of the steel filaments in the sheath (2).

RELATED ART DOCUMENT

PATENT DOCUMENT

[Patent Document 1] JPH02-306801A

SUMMARY OF THE INVENTION

PROBLEMS TO BE SOLVED BY THE INVENTION

As described above, since dump truck tires run on rough ground in many occasions, a cut failure of a belt is likely to occur, and it is conceivable that the cut directly causes tire failure, or infiltration of water through the cut causes corrosion of steel cord, leading to a separation failure. Thus, it is necessary to prevent infiltration of water into the steel cords by allowing a rubber to sufficiently permeate into the steel cords.

Moreover, dump truck tires usually include a belt composed of plural belt layers on the tire radial-direction outer side of a carcass. Among the belt layers, the one arranged as the outermost layer functions as a protective layer. However, when such a dump truck tire runs over a sharp-tipped undulation, a foreign matter sometimes penetrates between the cords of the outermost belt layer and causes damage to an crossing belt layer and the like arranged on the tire radial-direction inner side. Therefore, when it is desired to further improve the durability in the future, it is necessary to also improve the resistance to such penetration of a foreign matter without deteriorating the crack propagation resistance of the protective layer.

In view of the above, an object of the present invention is to provide a pneumatic tire in which not only the cutting resistance is enhanced but also the resistance to penetration of a foreign matter is improved without deterioration of the crack propagation resistance of an outermost belt layer.

MEANS FOR SOLVING THE PROBLEMS

The present inventor intensively studied to solve the above-described problems and consequently obtained the following finding. That is, the present inventor found that, in order to inhibit penetration of a foreign matter through the outermost belt layer, the amount of steel in the outermost belt layer can be increased; however, when the steel amount is excessively large, the gaps between the cords of the outermost belt layer are reduced and this makes a rubber crack generated at a belt end more likely to propagate. Based on this finding, the present inventor further intensively studied to discover that the above-described problems are solvable, thereby completing the present invention.

That is, the pneumatic tire of the present invention is a pneumatic tire including a belt composed of at least three belt layers on the tire radial-direction outer side of a carcass, the pneumatic tire being characterized in that:

a reinforcing material of at least an outermost belt layer among the at least three belt layers is a steel cord which has a layer-twisted structure including a core composed of two core filaments and a sheath composed of eight sheath filaments that are twisted together around the core, and

a steel cord amount in the outermost belt layer, which is represented by the following Equation (1), is 37 to 49:

$$\text{Steel cord diameter (mm)} \times \text{Steel cord end count (steel cords/50 mm)} \quad (1).$$

It is noted here that the term "steel cord diameter" used herein means the diameter of a circumscribed circle of the subject steel cord.

In the tire of the present invention, it is preferred that the tire include two crossing belt layers, which are inclined in the opposite directions across the tire equatorial plane, on the tire radial-direction inner side of the outermost belt layer, and that the steel cord amount in the crossing belt layers be 25 to 44 and be not greater than the steel cord amount in the outermost belt layer. In the tire of the present invention, it is also preferred that the steel cord amount in the outermost belt layer be 100 to 220% of the steel cord amount in the crossing belt layers. Further, in the tire of the present invention, it is preferred that a steel cord to cord distance G1 (mm) of the outermost belt layer and a steel cord to cord distance G2 (mm) of the crossing belt layers satisfy a relationship represented by the following Equation (2):

$$0.1 \leq G1 \leq G2 \leq 1.8 \quad (2).$$

Still further, in the tire of the present invention, it is preferred that the steel cord to cord distance G1 (mm) of the outermost belt layer and the steel cord to cord distance G2 (mm) of the crossing belt layers satisfy a relationship represented by the following Equation (3):

$$0.05 \leq G1/G2 < 1.0 \quad (3).$$

In the tire of the present invention, the two core filaments of the steel cord of the outermost belt layer are twisted together, the twisting direction of the core filaments and that of the sheath filaments being different. Moreover, preferably a diameter Dc of the core filaments and a diameter Ds of the sheath filaments satisfy a relationship represented by the following Equation (4):

$$0.90 \leq Ds/Dc \leq 1.10 \quad (4).$$

Yet still further, in the tire of the present invention, it is preferred that the diameter Dc of the core filaments and the diameter Ds of the sheath filaments be the same. Yet still further, in the tire of the present invention, it is preferred that the diameter Dc of the core filaments and the diameter Ds of the sheath filaments be both 0.30 to 0.55 mm. Yet still further, in the tire of the present invention, it is preferred that the twisting pitch of the core filaments be 5 to 15 mm. Yet still further, in the tire of the present invention, it is preferred that the twisting pitch of the sheath filaments be 9 to 30 mm.

EFFECTS OF THE INVENTION

According to the present invention, a pneumatic tire in which not only the cutting resistance is enhanced but also the resistance to penetration of a foreign matter is improved without deterioration of the crack propagation resistance of an outermost belt layer can be provided.

BRIEF DESCRIPTION OF THE DRAWINGS

[FIG. 1] FIG. 1 is a widthwise cross-sectional view illustrating a pneumatic tire according to one preferred embodiment of the present invention.
[FIG. 2] FIG. 2 is a cross-sectional view illustrating a steel cord of an outermost belt layer of a pneumatic tire according to one preferred embodiment of the present invention.
[FIG. 3A] FIG. 3A is a cross-sectional view illustrating a steel cord prior to a cut input of an outermost belt layer of a pneumatic tire according to one preferred embodiment of the present invention.

[FIG. 3B] FIG. 3B is a cross-sectional view illustrating the steel cord when a cut input is made of the outermost belt layer of the pneumatic tire according to one preferred embodiment of the present invention.

[FIG. 4A] FIG. 4A is a cross-sectional view of a steel cord having a 1×3+8 structure prior to a cut input.

[FIG. 4B] FIG. 4B is a cross-sectional view of the steel cord having a 1×3+8 structure when a cut input is made.

## MODE FOR CARRYING OUT THE INVENTION

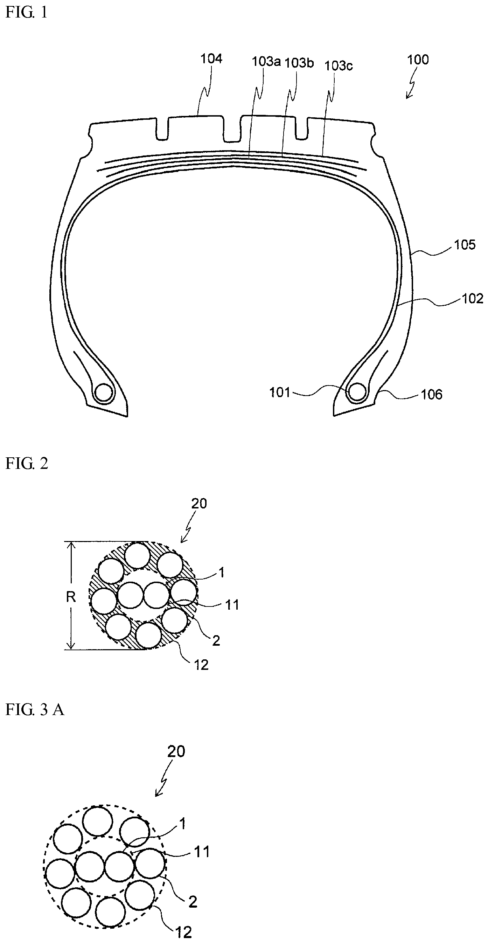

The pneumatic tire of the present invention will now be described in detail referring to the drawings. FIG. 1 is a widthwise cross-sectional view illustrating a pneumatic tire according to one preferred embodiment of the present invention. In the illustrated example, a tire 100 of the present invention includes: bead cores 101 arranged in a pair of left and right bead portions 106; and a tread portion 104 that is reinforced by a radial carcass 102, which extends from a crown portion to both bead portions 106 through side wall portions 105 and is wound around the bead cores 101 and thereby anchored to the respective bead portions 106, and a belt which is arranged on the crown portion tire radial-direction outer side of the radial carcass 102 and constituted by at least three belt layers 103a, 103b and 103c.

In the tire 100 of the present invention, among the at least three belt layers 103, a reinforcing material of at least the outermost belt layer 103c is a steel cord which has a layer-twisted structure including: a core composed of two core filaments; and a sheath composed of eight sheath filaments that are twisted together around the core. The steel cord having such a layer-twisted structure has excellent corrosion resistance since a rubber favorably permeates into the steel cord and infiltration of water into the steel cord can thereby be inhibited.

Further, in the tire 100 of the present invention, the steel cord amount in the outermost belt layer 103c, which is represented by the following Equation (1), is 37 to 49:

$$\text{Steel cord diameter (mm)} \times \text{Steel cord end count (steel cords/50 mm) (1).}$$

By setting the steel cord amount to be 37 to 49, the cutting resistance of the outermost belt layer 103c as well as the resistance of the outermost belt layer 103c against penetration of a foreign matter can be improved while suppressing deterioration of the crack propagation resistance of the outermost belt layer 103c. The steel cord amount in the outermost belt layer 103c is preferably 37 to 44. In the tire 100 of the present invention, the use of the cord having a specific 2+8 structure enables to control the steel cord amount in the above-described range without largely deteriorating the crack propagation resistance; however, it is difficult to attain a good performance balance in steel cords having other structures.

The tire 100 of the present invention preferably includes two crossing belt layers (crossing belt layers 103a and 103b in the illustrated example), which are inclined in the opposite directions across the tire equatorial plane, on the tire radial-direction inner side of the outermost belt layer 103c. In the tire 100 of the present invention, it is also preferred that the steel cord amount in the crossing belt layers 103a and 103b be 25 to 44 and be not greater than the steel cord amount in the outermost belt layer 103c. In this manner, by controlling the steel cord amount in the crossing belt layers 103a and 103b to be 25 or greater, resistance to penetration of a foreign matter can be attained also in the crossing belt layers 103a and 103b. However, when the steel cord amount in the crossing belt layers 103a and 103b is large, a crack generated between steel cords readily propagates, which is not preferred from the durability standpoint. Therefore, by controlling the steel cord amount in the crossing belt layers 103a and 103b to be 44 or less, a crack propagation resistance is ensured in the crossing belt layers 103a and 103b. In order to favorably attain this effect, the steel cord amount in the crossing belt layers 103a and 103b is more preferably 32 to 36.

Further, in the tire 100 of the present invention, it is preferred that the steel cord amount in the outermost belt layer 103c be 100 to 220% of the steel cord amount in the crossing belt layers 103a and 103b. By satisfying this relationship, the resistance to penetration of a foreign matter and the crack propagation resistance of the outermost belt layer 103c can be improved in a well-balanced manner without deteriorating neither of them. The steel cord amount in the outermost belt layer 103c is more preferably 106 to 217%, still more preferably 106 to 163%.

Yet still further, in the tire 100 of the present invention, it is preferred that the steel cord to cord distance G1 (mm) of the outermost belt layer 103c and the steel cord to cord distance G2 (mm) of the crossing belt layers 103a and 103b satisfy a relationship represented by the following Equation (2):

$$0.1 \leq G1 \leq G2 \leq 1.8 \qquad (2).$$

By satisfying this relationship, the resistance to penetration of a foreign matter and the crack propagation resistance of the outermost belt layer 103c can be improved in a more balanced manner without deteriorating neither of them. The G1 and the G2 more preferably satisfy:

$$0.3 \leq G1 \leq G2 \leq 1.3 \qquad (5).$$

Yet still further, in the tire 100 of the present invention, it is preferred that the steel cord to cord distance G1 (mm) of the outermost belt layer 103c and the steel cord to cord distance G2 (mm) of the crossing belt layers satisfy a relationship represented by the following Equation (3):

$$0.05 \leq G1/G2 < 1.0 \qquad (3).$$

By satisfying this relationship, the resistance to penetration of a foreign matter and the crack propagation resistance of the outermost belt layer 103c can be improved in an even more balanced manner. The G1 and the G2 satisfy more preferably:

$$0.2 \leq G1/G2 < 1.0 \qquad (6),$$

particularly preferably:

$$0.25 \leq G1/G2 < 0.75 \qquad (7).$$

FIG. 2 is a cross-sectional view illustrating a steel cord of an outermost belt layer of the pneumatic tire according to one preferred embodiment of the present invention. In FIG 2, R represents the diameter of the steel cord. As illustrated, a steel cord 20 of the outermost belt layer 103c in the tire 100 of the present invention has a layer-twisted structure including: a core 11 composed of two core filaments 1; and a sheath 12 composed of eight sheath filaments 2 that are twisted together around the core 11. In the steel cord 20 of the outermost belt layer 103c in the tire 100 of the present invention, the two core filaments 1 constituting the core 11 are twisted together. By adopting this constitution, the steel cord 20 has superior cutting resistance as compared to a conventional steel cord in which three core filaments are twisted together. The reasons for this are described below.

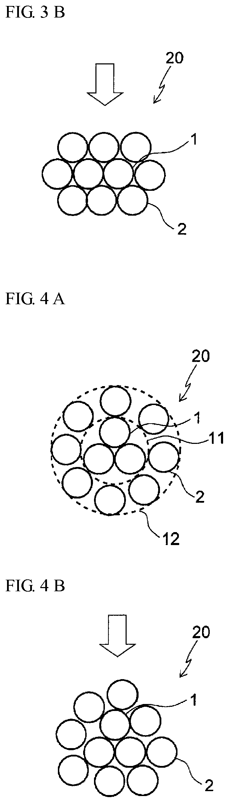

FIG. 3A is a cross-sectional view illustrating a steel cord priour to a cut input of an outermost belt layer of a pneumatic tire according to one preferred embodiment of the present invention. FIG. 3B is a cross-sectional view illustrating the steel cord when a cut input is made of the outermost belt layer of the pneumatic tire according to one preferred embodiment of the present invention. FIG. 4A is a cross-sectional view of a steel cord having a $1 \times 3 + 8$ structure prior to a cut input. FIG. 4B is a cross-sectional view of the steel cord having a $1 \times 3 + 8$ structure when a cut input is made. In the steel cords 20 having the respective cross-sections illustrated in FIGS. 3A and 4A, when a cut is input, the positions of the core filaments 1 and the sheath filaments 2 are changed as illustrated in FIGS. 3B and 4B, respectively. It is noted here that the arrows in FIGS. 3B and 4B each represent the direction of the cut input.

Comparing FIGS. 3B and 4B, since the steel cord 20 having the core 11 composed of two core filaments 1 that are twisted together has large gaps in the core 11 as illustrated in FIG. 3B, the sheath filaments 2 sink into the gaps of the core 11 when a cut is input, so that the cross-section of the steel cord 20 can be deformed into a flat shape. Accordingly, the cut input can be mitigated, and a high shear load is thereby attained. On the other hand, in the steel cord 20 having the core 11 in which three core filaments 1 are twisted together as illustrated in FIG. 4B, since there is no gap which the sheath filaments 2 can sink into when a cut is input, the cross-section of the steel cord 20 cannot be deformed into a flat shape even with the cut input. Accordingly, the cut input cannot be mitigated, and the shear load is relatively small. Similarly, in those cases of steel cords having one or four core filaments, the core has no gap for the sheath filaments to sink into. Therefore, in the steel cord 20 of the present invention, the core 11 is formed by twisting together two core filaments 1. Further, in order to allow the sheath filaments 2 to sink smoothly, it is preferred to use filaments having straightness as the core filaments 1 and the sheath filaments 2.

In the steel cord 20 of the outermost belt layer 103c in the tire 100 of the present invention, the number of the sheath filaments 2 is 8. When the number of the sheath filaments 2 is less than 8, the shear load is reduced since the amount of steel per unit area of the steel cord 20 is small. Meanwhile, when the number of the sheath filaments 2 is greater than 8, since the gaps between the sheath filaments 2 are small, the steel cord 20 cannot collapse into a flat shape, so that the shear load is reduced likewise. In addition, the small gaps between the sheath filaments 2 make it difficult for a rubber to permeate thereinto, which is not preferred.

Further, in the steel cord 20 of the outermost belt layer 103c in the tire 100 of the present invention, the twisting direction of the core filaments 1 is different from the twisting direction of the sheath filaments 2. This makes it easy for a rubber to infiltrate into the steel cord 20, and the corrosion resistance of the steel cord 20 is thereby improved. In addition, because of the difference in the twisting direction between the core filaments 1 and the sheath filaments 2, deformation of a calendered steel prepared by rubber-coating the steel cord 20 that is caused by cutting of the calendered steel can be suppressed, so that not only excellent processability in the production of the pneumatic tire 100 of the present invention but also an effect of inhibiting crack propagation against strains applied from various directions can be attained.

Still further, in the steel cord 20 of the outermost belt layer 103c in the tire 100 of the present invention, it is preferred that the diameter Dc of the core filaments 1 and the diameter Ds of the sheath filaments 2 satisfy a relationship represented by the following Equation (4):

$$0.90 \leq Ds/Dc \leq 1.10 \qquad (4).$$

With the value of Ds/Dc satisfying this range, good rubber permeability into the steel cord 20 can be ensured, and sufficient cutting resistance and strength can be attained. In order to favorably attain this effect, the Ds and the Dc satisfy more preferably:

$$0.95 \leq Ds/Dc \leq 1.08 \qquad (8),$$

still more preferably:

$$1.00 \leq Ds/Dc \leq 1.05 \qquad (9),$$

and the Ds and the Dc are particularly preferably the same (Ds = Dc).

Yet still further, in the steel cord 20 of the outermost belt layer 103c in the tire 100 of the present invention, it is preferred that the diameter Dc of the core filaments 1 and the diameter Ds of the sheath filaments 2 be both 0.30 to 0.55 mm. By controlling the diameter Dc of the core filaments 1 and the diameter Ds of the sheath filaments 2 to be in this range, good rubber permeability into the steel cord 20 can be ensured likewise, and sufficient cutting resistance and strength can be attained. In order to favorably attain this effect, the diameter Dc and the diameter Ds are preferably 0.30 to 0.46 mm, more preferably 0.37 to 0.43 mm.

Yet still further, in the steel cord 20 of the outermost belt layer 103c in the tire 100 of the present invention, it is preferred that the twisting pitch of the core filaments 1 be 5 to 15 mm. By controlling the twisting pitch of the core filaments 1 to be in this range, sufficient rubber permeability into the steel cord 20 can be attained. The twisting pitch of the core filaments 1 is more preferably 5 to 13 mm, still more preferably 7 to 9 mm.

Yet still further, in the steel cord 20 of the outermost belt layer 103c in the tire 100 of the present invention, it is preferred that the twisting pitch of the sheath filaments 2 be 9 to 30 mm. By controlling the twisting pitch of the sheath filaments 2 to be 9 mm or larger, the surface irregularities of the steel cord 20 can be reduced, as a result of which the adhesion between a rubber and the steel cord 20 is enhanced and the durability is thus improved. Meanwhile, when the twisting pitch of the sheath filaments 2 is large, spread of water along the sheath filaments 2 is accelerated. In order to inhibit this phenomenon, the twisting pitch of the sheath filaments 2 is preferably 30 mm or smaller, more preferably 9 to 26 mm, still more preferably 15 to 20 mm.

In the steel cord 20 of the outermost belt layer 103c in the tire 100 of the present invention, it is preferred that the sum S2 of the gap area S1 of the sheath 12 and the cross-sectional areas of the sheath filaments 2 satisfy a relationship represented by the following Equation (10):

$$40 \leq S1/S2 \times 100(\%) \leq 120 \qquad (10).$$

The "gap area S1" of the sheath 12 refers to the portion indicated with diagonal lines in FIG. 2. By controlling the value of S1/S2 × 100(%) to be 40 or larger, the gap area of the sheath 12 can be sufficiently ensured, and the steel cord 20 is made more likely to deform into a flat shape when a cut is input. In addition, since the gaps in the sheath 12 are increased, excellent rubber permeability is attained, so that a separation failure caused by corrosion of the steel cord 20 due to infiltration of water through a cut damage can be favorably inhibited. Meanwhile, by controlling the value of S1/S2 × 100(%) to be 120 or smaller, a certain amount of steel in the sheath 12 is ensured, and sufficient cutting resistance as a reinforcing material can thus be ensured.

The gap area S1 of the sheath 12 can be determined by the following Equation (11):

$$S1 = (Dc + Ds)^2 \pi - Dc^2 \pi - Ds^2 \pi \times N/4 \qquad (11),$$

where Dc: Diameter of core filaments,
Ds: Diameter of sheath filaments, and
N: Number of sheath filaments.

In the steel cord 20 of the outermost belt layer 103c in the tire 100 of the present invention, it is preferred that the gap area S1 of the sheath 12 be 0.30 mm² or larger. The effects of the present invention can be favorably obtained by adjusting the diameter Dc of the core filaments 1 and the diameter Ds of the sheath filaments 2 such that the gap area S1 of the sheath 12 is 0.30 mm² or larger.

In the steel cord 20 of the outermost belt layer 103c in the tire 100 of the present invention, it is preferred that the strength F1 of the core filaments 1 and the strength F2 of the sheath filaments 2 satisfy a relationship represented by the following Equation (12):

$$F1/F2 \times 100 \geq 90 \, (\%) \qquad (12).$$

In pneumatic tires, a strength is also demanded for belt layers. When the strength is insufficient, the pneumatic tires cannot withstand an internal pressure and a load, and their burst durability is reduced. However, when thick steel filaments are used for improving the strength, the rubber permeability into the steel cord is deteriorated. Moreover, an increase in the strength of the steel filaments for the purpose of increasing the strength of the belt layers, the shear load is deteriorated. Therefore, in the steel cord 20 of the present invention, by satisfying the Equation (12), preferably by controlling the F1 and the F2 to be the same (F1 = F2), such problems are avoided and the strength of the steel cord 20 is improved. The strength F2 of the sheath filaments 2 is preferably 150 N or greater and, taking into consideration the shear load, the upper limit of the F1 and F2 is 580 N or less.

In the tire 100 of the present invention, it is important that the tire 100 include a belt composed of at least three belt layers 103; that the reinforcing material of at least the outermost belt layer 103c among at least three belt layers 103 be a steel cord having a 2+8 structure; and that the amount of the steel cord in the outermost belt layer 103c satisfy the above-described range, and other features of the constitution can be designed as appropriate. For example, the structures of the steel cords in the belt layers other than the outermost belt layer 103c of the tire 100 of the present invention, namely the crossing belt layers 103a and 103b in the illustrated example, are not particularly restricted. For example, a steel cord having a 1×N structure (e.g., 1×3 or 1×5), a steel cord having an M+N bilayer structure (e.g., 1+3, 1+4, 1+5, 1+6, 2+2, 2+3, 2+4, 2+5, 2+6, 2+7, 3+6, 3+7, or 3+8), or a steel cord having an L+M+N (L = 1 to 4, M = 4 to 9, and N = 8 to 15) three-layer structure (e.g., a 3+9+15 structure) can be used. It is desirable to use a steel cord having the same 2+8 structure as the steel cord 20 used in the outermost belt layer 103c of the tire 100 of the present invention. In the tire 100 of the present invention, since a belt having a specific 2+8 structure is used as the outermost belt layer 103c, such a steel cord amount that further improves the crack propagation resistance can be ensured in the crossing belt layers 103a and 103b and, by using cords having a 2+8 structure also in the crossing belt layers 103a and 103b, crack propagation from the belt ends can be better inhibited; therefore, as compared to a case of using a belt having other structure, a broader range of performance control can be attained based on the steel cord amount in the crossing belt layers 103a and 103b.

The material of the steel filaments used in the steel cords of the belt layers 103 of the tire 100 of the present invention is also not particularly restricted, and any conventionally used steel filaments can be used; however, the material is preferably a high-carbon steel containing not less than 0.80% by mass of a carbon component. By using a high-hardness high-carbon steel containing not less than 0.80% by mass of a carbon component as the material of the filaments, the effects of the present invention can be favorably attained. Meanwhile, a carbon component content of greater than 1.5% by mass is not preferred since the ductility is reduced and the fatigue resistance is thus deteriorated.

In the tire 100 of the present invention, a plating treatment may be performed on the surfaces of the steel cords of the belt layers 103. The composition of the plating to be applied to the surfaces of the steel cords is not particularly restricted; however, a brass plating composed of copper and zinc is preferred, and a brass plating having a copper content of not less than 60% by mass is more preferred. By the plating treatment, the adhesion between the steel filaments and a rubber can be improved.

In the tire 100 of the present invention, the details of the tire constitution, the materials of the respective members and the like are also not particularly restricted, and the tire 100 of the present invention can be configured by appropriately selecting a conventionally known structure, materials and the like. For example, a tread pattern is formed as appropriate on the surface of the tread portion 104, bead fillers (not illustrated) are arranged on the tire radial-direction outer side of the respective bead cores 101, and an inner liner is arranged as an innermost layer of the tire 100. Further, as a gas filled into the tire 100 of the present invention, air having normal or adjusted oxygen partial pressure, or an inert gas such as nitrogen, can be used. The tire of the present invention has excellent cutting resistance as well as excellent resistance to penetration of a foreign matter through the outermost belt layer; therefore, the tire of the present invention can be suitably applied to trucks and buses.

EXAMPLES

The present invention will now be described in more detail by way of examples thereof.

<Examples 1 to 19 and Comparative Examples 1 to 12>

Tires having a belt composed of four belt layers on the radial-direction outer side of a carcass were produced at a tire size of 11R22.5/14PR. In the outermost belt layers of these tires, the cord type A to G shown in Table 1 were used as steel cords. The steel cords were arranged such that the major-axis direction was aligned with the belt width direction, and the belt angle was set at 20° with respect to the tire circumferential direction. A second belt layer and a third belt layer (the second layer and the third layer from the tire radial-direction inner side, respectively) were main crossing belt layers crossing at an angle of ±20°, and the structures and the like of the reinforcing steel cords were as shown in Tables 2 to 6. Further, in the first belt layer, the steel cord structure was 3+9+15×0.22+0.15, the belt angle was 50° with respect to the tire circumferential direction, and the end count was 20 steel cords/50 mm. The diameter of the steel cord used in the first belt layer was 1.35 mm, the cord to cord distance was 1.15 mm, and the first belt layer had a steel cord amount of 27. For each of the thus obtained tires, the cutting resistance, the penetration resistance and the crack propagation resistance were evaluated in accordance with the following procedures.

<Cutting Resistance>

A blade of 500 mm in width, 1.5 mm in thickness (bottom thickness = 5.0 mm) and 30 mm in height was gradually pressed against each tire to measure the force required for breaking a steel cord of the outermost belt layer, and the thus measured force was indicated as an index based on the value of Comparative Example 1. A larger value means superior cutting resistance, and a value of 150 or larger was regarded as satisfactory. The results thereof are also shown in Tables 2 to 6.

<Penetration Resistance>

A conical projection of 2.0 mm in diameter and 40 mm in height was sequentially pressed against the tire circumference at 16 spots, and the number of attempts where the conical projection penetrated between the cords of the outermost belt layer was measured and indicated as an index based on the value of Comparative Example 1. A larger value means superior penetration resistance, and a value of 160 or larger was regarded as satisfactory. The results thereof are also shown in Tables 2 to 6.

<Crack Propagation Resistance>

The thus produced tires were each mounted on a rim having a size of 8.25 inches and then subjected to a 300-hour drum running test at an air pressure of 700 kPa, a load of 26.7 kN and a speed of 60 km/h. After the completion of the drum running test, each tire was cut and disassembled, and the lengths of cracks generated in the outermost belt layer and the crossing belt layers were measured and indicated as an index based on the value of Comparative Example 1. A larger value means superior crack propagation resistance, and a value of 30 or larger was regarded as satisfactory for the outermost belt layer while a value of 90 or larger was regarded as satisfactory for the crossing belt layers. The results thereof are also shown in Tables 2 to 6.

[Table 1]

| | | | Cord type A | Cord type B | Cord type C | Cord type D | Cord type E | Cord type F | Cord type G |
|---|---|---|---|---|---|---|---|---|---|
| Core | | Number of filaments | 2 | 2 | 4 | 3 | 2 | 2 | 2 |
| | | Filament diameterDc (mm) | 0.4 | 0.4 | 0.4 | 0.4 | 0.4 | 0.4 | 0.55 |
| | | Filament strength F1 (N) | 346 | 346 | 346 | 346 | 346 | 346 | 568 |
| | | Filament twisting direction | - | Z | Z | Z | Z | Z | Z |
| | | Twisting pitch (mm) | - | 8 | 8 | 8 | 8 | 8 | 8 |
| Sheath | | Number of filaments | 8 | 8 | 8 | 8 | 7 | 9 | 8 |
| | | Filament diameterDs (mm) | 0.4 | 0.4 | 0.4 | 0.4 | 0.4 | 0.4 | 0.55 |
| | | Filament strength F2 (N) | 346 | 346 | 346 | 346 | 346 | 346 | 568 |
| | | Filament twisting direction | S | S | S | S | S | S | S |
| | | Twisting pitch (mm) | 17 | 17 | 17 | 17 | 17 | 17 | 17 |
| Core-sheath filament twisting direction | | | different | different | different | different | different | different | different |
| Ds/Dc | | | 1.0 | 1.0 | 1.0 | 1.0 | 1.0 | 1.0 | 1.0 |
| Sheath gap area, S1 (mm$^2$) | | | 0.32 | 0.50 | 0.71 | 0.58 | 0.63 | 0.38 | 0.95 |
| Sum of sheath filament cross-sectional areas, S2 (mm$^2$) | | | 1.01 | 1.01 | 1.01 | 1.01 | 0.88 | 1.13 | 1.90 |
| S1/S2 × 100(%) | | | 31.8 | 50.0 | 70.7 | 57.7 | 71.4 | 33.3 | 50.0 |
| F1/F2 × 100(%) | | | 100 | 100 | 100 | 100 | 100 | 100 | 100 |

[Table 2]

| | | Comparative Example | Example 1 | Example 2 | Comparative Example 2 | Comparative Example 3 | Comparative Example 4 |
|---|---|---|---|---|---|---|---|
| Outermost belt layer | Cord type | A | B | B | C | D | E |
| | Cord diameter (mm) | 1.6 | 1.6 | 1.6 | 1.77 | 1.66 | 1.6 |
| | Cord to cord distance, G1 (mm) | 1.53 | 0.32 | 0.32 | 0.36 | 0.34 | 0.32 |
| | End count (cords/50 mm) | 16 | 26 | 26 | 24 | 25 | 26 |
| | SC amount* in calendered steel | 26 | 42 | 42 | 42 | 42 | 42 |
| Crossing belt layers | Cord type | 3+9+15 ×0.22+1 | 3+9+15 ×0.22+1 | B | 3+9+15 ×0.22+1 | 3+9+15 ×0.22+1 | 3+9+15 ×0.22+1 |
| | Cord diameter (mm) | 1.35 | 1.35 | 1.6 | 1.35 | 1.35 | 1.35 |
| | Cord to cord distance, G2 (mm) | 0.73 | 0.73 | 0.67 | 0.73 | 0.73 | 0.73 |
| | End count (cords/50 mm) | 24 | 24 | 22 | 24 | 24 | 24 |
| | SC amount* in calendered steel | 32 | 32 | 35 | 32 | 32 | 32 |
| SC amount in outermost layer/SC amount in crossing layers × 100(%) | | 79 | 128 | 118 | 128 | 128 | 128 |
| G1/G2 | | 2.08 | 0.44 | 0.48 | 0.49 | 0.46 | 0.44 |
| Cutting resistance (index) | | 100 | 168 | 165 | 154 | 151 | 146 |
| Penetration resistance (index) | | 100 | 227 | 251 | 223 | 225 | 227 |
| Crack propagation resistance of outermost belt layer (index) | | 100 | 339 | 339 | 19 | 18 | 169 |
| Crack propagation resistance of crossing belt layers (index) | | 100 | 100 | 447 | 100 | 100 | 100 |
| *: steel cord amount | | | | | | | |

[Table 3]

| | | Comparative Example 5 | Comparative Example 6 | Example 3 | Example 4 | Comparative Example 7 | Example 5 |
|---|---|---|---|---|---|---|---|
| Outermost belt layer | Cord type | F | B | B | B | B | B |
| | Cord diameter (mm) | 1.6 | 1.6 | 1.6 | 1.6 | 1.6 | 1.6 |
| | Cord to cord distance, G1 (mm) | 0.32 | 0.62 | 0.56 | 0.22 | 0.00 | 0.32 |
| | End count (cords/50 mm) | 26 | 23 | 23 | 28 | 31 | 26 |
| | SC amount* in calendered steel | 42 | 36 | 37 | 44 | 50 | 42 |
| Crossing belt layers | Cord type | 3+9+15 ×0.22+1 | 3+9+15 ×0.22+1 | 3+9+15 ×0.22+1 | 3+9+15 ×0.22+1 | 3+9+15 ×0.22+1 | 3+9+15 ×0.22+1 |
| | Cord diameter (mm) | 1.35 | 1.35 | 1.35 | 1.35 | 1.35 | 1.35 |
| | Cord to cord distance, G2 (mm) | 0.73 | 0.73 | 0.73 | 0.73 | 0.73 | 1.46 |
| | End count (cords/50 mm) | 24 | 24 | 24 | 24 | 24 | 18 |
| | SC amount* in calendered steel | 32 | 32 | 32 | 32 | 32 | 24 |
| SC amount in outermost layer/SC amount in crossing layers × 100(%) | | 128 | 111 | 114 | 136 | 154 | 173 |
| G1/G2 | | 0.44 | 0.85 | 0.77 | 0.30 | 0.00 | 0.22 |
| Cutting resistance (index) | | 166 | 150 | 153 | 175 | 195 | 159 |
| Penetration resistance (index) | | 227 | 157 | 166 | 280 | 679 | 170 |
| Crack propagation resistance of outermost belt layer (index) | | 17 | 653 | 590 | 229 | 9 | 339 |
| Crack propagation resistance of crossing belt layers (index) | | 100 | 100 | 100 | 100 | 100 | 101 |

[Table 4]

| | | Example 6 | Example 7 | Example 8 | Example 9 | Example 10 | Example 11 |
|---|---|---|---|---|---|---|---|
| Outermost belt layer | Cord type | B | B | B | B | B | B |
| | Cord diameter (mm) | 1.6 | 1.6 | 1.6 | 1.6 | 1.6 | 1.6 |
| | Cord to cord distance, G1 (mm) | 0.32 | 0.32 | 0.32 | 0.31 | 0.22 | 0.05 |
| | End count (cords/ 50 mm) | 26 | 26 | 26 | 26 | 28 | 30 |
| | SC amount* in calendered steel | 42 | 42 | 42 | 42 | 44 | 48 |
| Crossing belt layers | Cord type | 3+9+15 ×0.22+1 | 3+9+15 ×0.22+1 | 3+9+15 ×0.22+1 | G | G | G |
| | Cord diameter (mm) | 1.35 | 1.35 | 1.35 | 2.2 | 2.2 | 2.2 |
| | Cord to cord distance, G2 (mm) | 1.35 | 0.18 | 0.15 | 0.30 | 0.30 | 2.69 |
| | End count (cords/ 50 mm) | 19 | 33 | 33 | 20 | 20 | 10 |
| | SC amount* in calendered steel | 25 | 44 | 45 | 44 | 44 | 23 |
| SC amount in outermost layer/SC amount in crossing layers × 100(%) | | 166 | 95 | 92 | 95 | 100 | 215 |
| G1/G2 | | 0.24 | 1.75 | 2.15 | 1.05 | 0.73 | 0.02 |
| Cutting resistance (index) | | 160 | 180 | 181 | 155 | 183 | 177 |
| Penetration resistance (index) | | 310 | 503 | 686 | 401 | 579 | 257 |
| Crack propagation resistance of outermost belt layer (index) | | 339 | 339 | 339 | 329 | 229 | 56 |
| Crack propagation resistance of crossing belt layers (index) | | 101 | 99 | 90 | 99 | 99 | 104 |

[Table 5]

| | | Comparative Example 8 | Example 12 | Example 13 | Comparative Example 9 | Comparative Example 10 | Example 14 |
|---|---|---|---|---|---|---|---|
| Outermost belt layer | Cord type | B | G | G | G | G | B |
| | Cord diameter (mm) | 1.6 | 2.2 | 2.2 | 2.2 | 2.2 | 1.6 |
| | Cord to cord distance, G1 (mm) | 0.02 | 0.09 | 0.10 | 1.80 | 1.81 | 0.07 |
| | End count (cords/50 mm) | 31 | 22 | 22 | 13 | 12 | 30 |
| | SC amount* in calendered steel | 50 | 48 | 48 | 28 | 27 | 48 |
| Crossing belt layers | Cord type | G | 3+9+15 ×0.22+1 | 3+9+15 ×0.22+1 | 3+9+15 ×0.22+1 | 3+9+15 ×0.22+1 | 3+9+15 ×0.22+1 |
| | Cord diameter (mm) | 2.2 | 1.35 | 1.35 | 1.35 | 1.35 | 1.35 |
| | Cord to cord distance, G2 (mm) | 2.69 | 0.15 | 0.15 | 0.15 | 0.15 | 1.86 |
| | End count (cords/50 mm) | 10 | 33 | 33 | 33 | 33 | 16 |
| | SC amount* in calendered steel | 23 | 45 | 45 | 45 | 45 | 21 |
| SC amount in outermost layer/SC amount in crossing layers × 100(%) | | 220 | 107 | 106 | 61 | 61 | 227 |
| G1/G2 | | 0.01 | 0.60 | 0.67 | 12.00 | 12.07 | 0.04 |
| Cutting resistance (index) | | 180 | 229 | 228 | 151 | 151 | 176 |
| Penetration resistance (index) | | 259 | 812 | 694 | 152 | 147 | 235 |
| Crack propagation resistance of outermost belt layer (index) | | 17 | 70 | 105 | 1,889 | 1,899 | 65 |
| Crack propagation resistance of crossing belt layers (index) | | 104 | 99 | 99 | 99 | 99 | 102 |

[Table 6]

| | | Example 15 | Example 16 | Example 17 | Example 18 | Example 19 | Comparative Example 11 | Comparative Example 12 |
|---|---|---|---|---|---|---|---|---|
| Outermost belt layer | Cord type | B | B | B | B | B | B | B |
| | Cord diameter (mm) | 1.6 | 1.6 | 1.6 | 1.6 | 1.6 | 1.6 | 1.6 |
| | Cord to cord distance, G1 (mm) | 0.09 | 0.18 | 0.19 | 0.03 | 0.04 | 0.73 | 0.77 |
| | End count (cords/50 mm) | 30 | 28 | 28 | 31 | 31 | 21 | 21 |
| | SC amount* in calendered steel | 47 | 45 | 45 | 49 | 49 | 34 | 34 |
| Crossing belt layers | Cord type | 3+9+15 ×0.22+1 | 3+9+15 ×0.22+1 | 3+9+15 ×0.22+1 | 3+9+15 ×0.22+1 | 3+9+15 ×0.22+1 | 3+9+15 ×0.22+1 | 3+9+15 ×0.22+1 |
| | Cord diameter (mm) | 1.35 | 1.35 | 1.35 | 1.35 | 1.35 | 1.35 | 1.35 |
| | Cord to cord distance, G2 (mm) | 1.86 | 0.18 | 0.18 | 0.73 | 0.73 | 0.73 | 0.73 |
| | End count (cords/50 mm) | 16 | 33 | 33 | 24 | 24 | 24 | 24 |
| | SC amount* in calendered steel | 21 | 44 | 44 | 32 | 32 | 32 | 32 |
| SC amount in outermost layer/SC amount in crossing layers × 100(%) | | 225 | 102 | 101 | 152 | 151 | 106 | 104 |
| G1/G2 | | 0.05 | 1 | 1.05 | 0.04 | 0.05 | 1 | 1.05 |
| Cutting resistance (index) | | 174 | 190 | 189 | 192 | 191 | 144 | 142 |
| Penetration resistance (index) | | 225 | 816 | 765 | 560 | 537 | 144 | 140 |
| Crack propagation resistance of outermost belt layer (index) | | 98 | 193 | 203 | 31 | 38 | 769 | 808 |
| Crack propagation resistance of crossing belt layers (index) | | 102 | 99 | 90 | 100 | 100 | 100 | 100 |

EP 3 495 164 B1

14

From Tables 2 to 6 above, it is seen that, in the tires according to the present invention, major deterioration of the crack propagation resistance was inhibited while improving the cutting resistance and the resistance of the outermost belt layer against penetration of a foreign matter.

DESCRIPTION OF SYMBOLS

1: core filament

2: sheath filament

11: core

12: sheath

20: steel cord

100: pneumatic tire

101: bead core

102: carcass

103: belt layer

104: tread portion

105: side wall portion

106: bead portion

**Claims**

1. A pneumatic tire (100) comprising a belt composed of at least three belt layers (103) on the tire radial-direction outer side of a carcass (102),
   wherein a reinforcing material of at least an outermost belt layer (103) among the at least three belt layers (103) is a steel cord (20) which has a layer-twisted structure comprising a core (11) composed of two core filaments (1) having a circular cross section and a sheath (12) composed of eight sheath filaments (2) that are twisted together around the core (11),
   the two core filaments (1) are twisted together, and
   a steel cord (20) amount in the outermost belt layer (103), which is represented by the following Equation (1), is 37 to 49:

$$\text{Steel cord diameter (mm)} \times \text{Steel cord end count (steel cords/50 mm) (1)},$$

   **characterised in that**:
   the twisting direction of the core filaments (1) is different from the twisting direction of the sheath filaments (2.

2. The pneumatic tire (100) according to claim 1, comprising two crossing belt layers (103) inclined in the opposite directions across the tire equatorial plane on the tire radial-direction inner side of the outermost belt layer (103), wherein a steel cord (20) amount in the crossing belt layers (103) is 25 to 44 and is not greater than the steel cord (20) amount in the outermost belt layer (103).

3. The pneumatic tire (100) according to claim 2, wherein the steel cord (20) amount in the outermost belt layer (103) is 100 to 220% of the steel cord (20) amount in the crossing belt layers (103).

4. The pneumatic tire (100) according to claim 2 or 3, wherein a steel cord (20) to cord distance G1 (mm) of the outermost belt layer (103) and a steel cord (20) to cord distance G2 (mm) of the crossing belt layers (103) satisfy a relationship represented by the following Equation (2):

$$0.1 \leq G1 \leq G2 \leq 1.8 \qquad (2).$$

5. The pneumatic tire (100) according to any one of claims 2 to 4, wherein the steel cord (20) to cord distance G1 (mm) of the outermost belt layer (103) and the steel cord (20) to cord distance G2 (mm) of the crossing belt layers (103) satisfy a relationship represented by the following Equation (3):

$$0.05 \leq G1/G2 < 1.0 \qquad (3).$$

6. The pneumatic tire (100) according to any one of claims 1 to 5, wherein a diameter Dc of the core filaments (1) and a diameter Ds of the sheath filaments (2) satisfy a relationship represented by the following Equation (4):

$$0.90 \leq Ds/Dc \leq 1.10 \qquad (4).$$

7. The pneumatic tire (100) according to any one of claims 1 to 6, wherein the diameter Dc of the core filaments (1) and the diameter Ds of the sheath filaments (2) are the same.

8. The pneumatic tire (100) according to any one of claims 1 to 7, wherein the diameter Dc of the core filaments (1) and the diameter Ds of the sheath filaments (2) are both 0.30 to 0.55 mm.

9. The pneumatic tire (100) according to any one of claims 1 to 8, wherein a twisting pitch of the core filaments (1) is 5 to 15 mm.

10. The pneumatic tire (100) according to any one of claims 1 to 9, wherein a twisting pitch of the sheath filaments (2) is 9 to 30 mm.

**Patentansprüche**

1. Luftreifen (100), der einen Gürtel, der aus mindestens drei Gürtellagen (103) besteht, auf der in Reifenradialrichtung äußeren Seite einer Karkasse (102) umfasst,
wobei ein Verstärkungsmaterial mindestens einer äußersten Gürtellage (103) unter den mindestens drei Gürtellagen (103) ein Stahlkord (20) ist, der eine lagenverdrillte Struktur aufweist, die einen Kern (11), der aus zwei Kernfäden (1), die einen kreisförmigen Querschnitt aufweisen, besteht, und eine Hülle (12), die aus acht Hüllenfäden (2), die miteinander um den Kern (11) verdrillt sind, besteht, umfasst,
die zwei Kernfäden (1) miteinander verdrillt sind und
eine Menge an Stahlkord (20) in der äußersten Gürtellage (103), die durch die folgende Gleichung (1) dargestellt wird, 37 bis 49 beträgt:

$$\text{Stahlkord-Durchmesser (mm)} \times \text{Stahlkord-Endenzahl (Stahlkords/50 mm) (1)},$$

**dadurch gekennzeichnet, dass**:
sich die Verdrillungsrichtung der Kernfäden (1) von der Verdrillungsrichtung der Hüllenfäden (2) unterscheidet.

2. Luftreifen (100) nach Anspruch 1, der zwei kreuzende Gürtellagen (103), die in den entgegengesetzten Richtungen über die Reifenäquatorialebene geneigt sind, auf der in der Radialrichtung inneren Seite der äußersten Gürtellage (103) umfasst, wobei eine Menge an Stahlkord (20) in den kreuzenden Gürtellagen (103) 25 bis 44 beträgt und nicht größer ist als die Menge an Stahlkord (20) in der äußersten Gürtellage (103).

3. Luftreifen (100) nach Anspruch 2, wobei die Menge an Stahlkord (20) in der äußersten Gürtellage (103) 100 bis 220 % der Menge an Stahlkord (20) in den kreuzenden Gürtellagen (103) beträgt.

4. Luftreifen (100) nach Anspruch 2 oder 3, wobei eine Entfernung G1 (mm) von Stahlkord (20) zu Kord der äußersten Gürtellage (103) und eine Entfernung G2 (mm) von Stahlkord (20) zu Kord der kreuzenden Gürtellagen (103) eine Beziehung erfüllen, die durch die folgende Gleichung (2) dargestellt wird:

$$0,1 \leq G1 \leq G2 \leq 1,8 \quad (2).$$

5. Luftreifen (100) nach einem der Ansprüche 2 bis 4, wobei die Entfernung G1 (mm) von Stahlkord (20) zu Kord der äußersten Gürtellage (103) und die Entfernung G2 (mm) von Stahlkord (20) zu Kord der kreuzenden Gürtellagen (103) eine Beziehung erfüllen, die durch die folgende Gleichung (3) dargestellt wird:

$$0,05 \leq G1/G2 < 1,0 \quad (3).$$

6. Luftreifen (100) nach einem der Ansprüche 1 bis 5, wobei ein Durchmesser Dc der Kernfäden (1) und ein Durchmesser Ds der Hüllenfäden (2) eine Beziehung erfüllen, die durch die folgende Gleichung (4) dargestellt wird:

$$0,90 \leq Ds/Dc \leq 1,10 \quad (4).$$

7. Luftreifen (100) nach einem der Ansprüche 1 bis 6, wobei der Durchmesser Dc der Kernfäden (1) und der Durchmesser Ds der Hüllenfäden (2) gleich sind.

8. Luftreifen (100) nach einem der Ansprüche 1 bis 7, wobei der Durchmesser Dc der Kernfäden (1) und der Durchmesser Ds der Hüllenfäden (2) beide 0,30 bis 0,55 mm betragen.

9. Luftreifen (100) nach einem der Ansprüche 1 bis 8, wobei ein Verdrillungsabstand der Kernfäden (1) 5 bis 15 mm beträgt.

10. Luftreifen (100) nach einem der Ansprüche 1 bis 9, wobei ein Verdrillungsabstand der Hüllenfäden (2) 9 bis 30 mm beträgt.

**Revendications**

1. Bandage pneumatique (100), comprenant une ceinture composée d'au moins trous couches de ceinture (103) sur le côté externe, dans la direction radiale du bandage pneumatique, d'une carcasse (102) ;
dans lequel un matériau de renforcement d'au moins une couche de ceinture la plus externe (103) parmi les au moins trois couches de ceinture (103) est constitué par un câblé en acier (20) comportant une structure de couche torsadée comprenant une âme (11) composée de deux filaments d'âme (1) ayant une section transversale circulaire, et une gaine (12) composée de huit filaments de gaine (2) torsadés les uns avec les autres autour de l'âme (11) ;
les deux filaments d'âme (1) sont torsadés l'un avec l'autre ; et
un nombre des câblés d'acier (20) dans la couche de ceinture la plus externe (103), représentée par l'équation ci-dessous (1) est compris entre 37 et 49 ;

diamètre des câblés d'acier (mm) x nombre de filaments d'acier (filaments d'acier /50 mm)  (1) ;

**caractérisé en ce que** :
la direction de torsion des filaments d'âme (1) est différente de la direction de torsion des filaments de gaine (2).

2. Bandage pneumatique (100) selon la revendication 1, comprenant deux couches de ceinture à croisement (103) inclinées dans la direction opposée à travers le plan équatorial du bandage pneumatique, sur le côté interne, dans la direction radiale du bandage pneumatique, de la couche de ceinture la plus externe (103), un nombre de câblés d'acier (20) dans les couches de ceinture à croisement (103) étant de 25 à 44 et n'étant pas supérieur au nombre de câblés d'acier (20) dans la couche de ceinture la plus externe (103).

3. Bandage pneumatique (100) selon la revendication 2, dans lequel le nombre de câblés d'acier (20) dans la couche de ceinture la plus externe (130) représente 100 à 220% du nombre de câblés d'acier (20) dans les couches de ceinture à croisement (103).

4. Bandage pneumatique (100) selon les revendications 2 ou 3, dans lequel une distance G1 (mm) entre les câblés d'acier (20) de la couche de ceinture externe extrême (103) et une distance G2 (mm) entre les câblés d'acier (20) des couches de ceinture à croisement (103) satisfont une relation représentée par l'équation (2) ci-dessous :

$$0{,}1 \leq G1 \leq G2 \leq 1{,}8 \quad (2).$$

5. Bandage pneumatique (100) selon l'une quelconque des revendications 2 à 4, dans lequel la distance G1 (mm) entre les câblés d'acier (20) de la couche de ceinture la plus externe (103) et la distance G2 (mm) entre les câblés d'acier (2) des couches de ceinture à croisement (103) satisfont une relation représentée par l'équation (3) ci-dessous :

$$0{,}05 \leq G1/G2 < 1{,}0 \quad (3).$$

6. Bandage pneumatique (100) selon l'une quelconque des revendications 1 à 5, dans lequel un diamètre Dc des filaments d'âme (1) et un diamètre Ds des filaments de gaine (2) satisfont une relation représentée par l'équation (4) ci-dessous :

$$0{,}90 \leq Ds/Dc \leq 1{,}10 \quad (4).$$

7. Bandage pneumatique (100) selon l'une quelconque des revendications 1 à 6, dans lequel le diamètre Dc des filaments d'âme (1) et le diamètre Ds des filaments de gaine (2) sont identiques.

8. Bandage pneumatique (100) selon l'une quelconque des revendications 1 à 7, dans lequel le diamètre Dc des filaments d'âme (1) et le diamètre Ds des filaments de gaine (2) sont tous les deux compris entre 0,30 et 0,55 mm.

9. Bandage pneumatique (100) selon l'une quelconque des revendications 1 à 8, dans lequel un pas de torsion des filaments d'âme (1) est compris entre 5 et 15 mm.

10. Bandage pneumatique (100) selon l'une quelconque des revendications 1 à 9, dans lequel un pas de torsion des filaments de gaine (2) est compris entre 9 et 30 mm.

FIG. 1

FIG. 2

FIG. 3 A

FIG. 3 B

FIG. 4 A

FIG. 4 B

**REFERENCES CITED IN THE DESCRIPTION**

**Patent documents cited in the description**

- EP 0399795 A1